# EUROPEAN PATENT SPECIFICATION

(11) **EP 3 279 600 B1**
(45) Date of publication and mention of the grant of the patent: **27.05.2020**
(21) Application number: 16464007.0
(22) Date of filing: 08.08.2016
(51) Int. Cl.: F28F 9/02, F16L 23/22, F28D 1/053, F16L 41/08

(54) **HEAT EXCHANGER WITH CONNECTION DEVICE**
WÄRMETAUSCHER MIT VERBINDUNGSVORRICHTUNG
ÉCHANGEUR DE CHALEUR AYANT UN DISPOSITIF DE CONNEXION

(43) Date of publication of application: 07.02.2018
(73) Proprietor: S.C.RAAL SA, 420063 Bistrita-Nasaud county (RO)
(72) Inventor: Mircea, David, 420097 Bistrita-Nasaud county (RO); Marian, Toma Adrian, 420024 Bistrita-Nasaud county (RO); Gheorghe, Monda, 420147 Bistrita-Nasaud county (RO)

(56) References cited:
- EP-A1- 1 004 804
- EP-A2- 0 962 738
- DE-A1-102015 201 280
- FR-A1- 2 311 246
- GB-A- 2 072 289
- US-A- 2 761 205
- US-A- 3 587 655
- US-A- 3 746 348
- US-A- 4 367 793
- US-B1- 6 899 169

## Description

The invention relates to a heat exchanger with connecting device, used especially for air cooled hydraulic oil coolers.

It is acknowledged that there already exists a heat exchanger with a connecting device according the WO 2009/108974 A1 and US 4 367 793 A documents. This heat exchanger consists of an assembly of a heat transfer core and two tanks which are welded at each end of the heat transfer core. On each tank there is a passing body with a passage hole and eight threaded holes circular displayed. The passing body passage hole diameter is equal to the inner diameter passage hole of the connecting device. The 'L' shaped connecting device has a threaded part for fitting the inlet/outlet piping. The connecting device is then screwed to the assembly using the threaded circular displayed holes.

The technical issue that this invention solves is allowing the possibility of moving the connecting device in different positions on the heat exchanger tank by using seven mounting holes with seven according screws that allow mounting the connection device to the heat exchanger tank in different positions. The heat exchanger with connecting device, according to the invention, has the following advantages:
- major decrease of the expensive material consumption used for previous solutions:
- major overall dimensions decrease of the installations where the new solution is used;
- reduction of the manufacturing costs by decreasing manual labor use and by decreasing the specific power consumption;
- maximum efficiency at minimum volume, compact dimensions of the equipment;
- possibility of positioning the connections according to the needs;

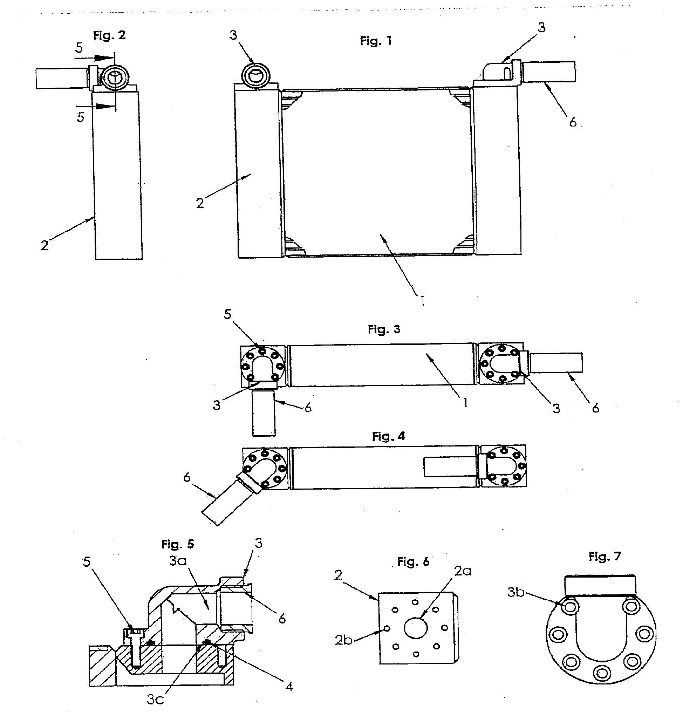

Below there is an example with details regarding the manufacturing of the invented solution (fig 1- 7):
- fig 1. - main view of the heat exchanger with connecting device assembly;
- fig 2. - side view of the heat exchanger with connecting device assembly;
- fig 3. - top view of the heat exchanger with connecting device assembly;
- fig 4. - top view of the heat exchanger with connecting device assembly;
- fig 5. - assembly view of the connecting device to the tank;
- fig 6. - view of the passing body which is welded on the tank;
- fig 7. - top view of the connecting device;

The heat exchanger with a connecting device according to the invention consists of an assembly of a heat transfer core **(1)** and two tanks **(2)** which are welded at each end of the heat transfer core. On each tank, either on the top or on the bottom, there is a passing body **(2a)** with a passage hole and eight threaded holes circular displayed **(2b).** The passing body passage hole diameter is equal to the inner diameter passage hole of the connecting device **(3a).** The 'L' shaped connecting device has a threaded part for fitting the inlet/outlet piping which is included in the connecting device **(3).** The connecting device is then screwed with the seven screws to the assembly using the threaded circular displayed holes. The tightness of the assembly is ensured by an O-ring **(4)** which is mounted in a channel **(3a)** .The connecting device has a circular base with seven holes **(3b)** used for mounting on the assembly, this leading to eight different mounting positions of the connecting device.

## Claims

1. A heat exchanger with connecting device (3) composed of a heat transfer core **(1)** with tanks on each end (2), on each tank there is a passing body **(2a)** around which there are eight circular displayed treaded holes (2b); the passing body hole inner diameter is equal to the passing hole (3a) diameter of the connecting device (3); the 'L' shaped connecting device (3) has a threaded part **(6)** for fitting the inlet/outlet piping, which is included in the connecting device (3), wherein the heat exchanger is **characterized by** the fact that the connecting device (3) has a circular base with seven holes **(3b)** with seven according screws **(5)** which allow the mounting of the connecting device **(3)** to the tank **(2)** in 8 different positions, and wherein sealing is made by an o-ring (4) for which on the lower side of the connecting device (3) there is a channel (3c).

## Patentansprüche

1. Wärmetauscher mit Verbindungsvorrichtung die aus einem Wärmeübertragungskem (1) mit Behälter an jedem Ende (2) besteht. An jedem Behälter befindet sich ein vorbeigehender Körper (2a), um den sich einige Gewindebohrungen kreisförmig angezeigt sind (2b). Der Innendurchmesser des Durchgangslochs ist gleich dem Durchgangslochdurchmesser der Verbindungsvorrichtung (3a). Die L-förmige Verbindungsvorrichtung hat ein Gewindeteil (6) zur Montage der Ein- und Austritt der Rohrleitung, die in der Verbindungsvorrichtung (3) enthalten ist. Dieser Wärmetauscher zeichnet sich dadurch aus, dass der Behälter (2) sieben Löcher (3b) mit sieben entsprechenden Schrauben (5) aufweist, die die Montage der Verbindungsvorrichtung (3) am Behälter (2) in verschiedenen Positionen ermöglichen.

## Revendications

1. Échangeur de chaleur avec dispositif de connexion composé d'un noyau de transfert de chaleur (X) avec des réservoirs à chaque extrémité (2), Sur chaque réservoir, il y a un corps passant (2a) autour duquel se trouvent étalées des trous filetés circulaires (2b). Le diamètre intérieur du trou du corps passant est égal au diamètre du trou de passage du dispositif de connexion (3a). Le dispositif de raccordement en V comporte une partie filetée (6) pour le montage de la tuyauterie d'entrée / sortie, qui est incluse dans le dispositif de raccordement (3). Cet échangeur de chaleur est **caractérisé par le fait que** le réservoir (2) a sept trous (3b) avec sept vis correspondants (5) qui permettent le montage du dispositif de raccordement (3) au réservoir (2) dans différentes positions.
